# EUROPEAN PATENT APPLICATION

(11) **EP 1 669 859 A2**
(43) Date of publication of application: **14.06.2006**
(21) Application number: 05108765.8
(22) Date of filing: 22.09.2005
(51) Int. Cl.: G06F 9/44

(54) **Object cloning for demand events**

(30) Priority: 05.10.2004 US 958849
(71) Applicant: Microsoft Corporation, Redmond WA 98052 (US)
(72) Inventor: Garden, Euan P., 98052, Redmond (US); Haselden, J. Kirk, 98052, Redmond (US); Shatnawi, Mohammed F., 98052, Redmond (US)
(74) Representative: Grünecker, Kinkeldey, Stockmair & Schwanhäusser Anwaltssozietät

(57) **Abstract**

A system and method for cloning objects by configuring a cloned object with properties of a shared object or of a properties collection for a demand event, and for unconfiguring the cloned object for a design event initiated on the cloned object. During a design event, the cloned object may point to or be associated with the shared object or properties collection. A design event performed on the cloned object may actually be performed on the shared object or properties collection with or without user knowledge. Additionally, an embodiment of the invention may allow for dynamic execution of the cloned object at demand time by altering a variable of a property expression.

## Description

### FIELD OF THE INVENTION

The field of the invention generally relates to object model software applications and specifically to sharing configuration properties among objects.

### BACKGROUND OF THE INVENTION

Software applications may contain numerous objects that define the functionality of the application. Some objects within an application may be distinguishable from others in the sense that the objects may not have the same properties as other objects within the application. Many other objects within the application, however, may be essentially identical. These essentially identical objects may share essentially the same functionality within the application. Such objects may be located in numerous places within the same application and call for the execution of essentially the same actions or serve the same purpose.

While the objects may be virtually identical, the properties of each of these objects may be configured individually prior to execution. Such configuration may require that nearly identical code be duplicated at different locations. The coding of the objects may be quite lengthy and complex. If the code that implements a set of related objects, or the underlying algorithm implemented by the code, should change, then the change must be applied at the various locations of the related objects. Editing of numerous identical, or virtually identical, objects may be labor intensive and time consuming. The editing may also be prone to errors, resulting in further labor intensive and time consuming efforts to debug a defunct or malfunctioning application that may have an error in numerous locations within the application.

Therefore, there is a need to reduce labor intensive and time consuming maintenance on and debugging of the numerous similar, or nearly identical, objects within an application.

### SUMMARY OF THE INVENTION

The invention may enable a user to configure properties of one object, and allow these properties to be automatically shared among other similar objects. Such sharing or cloning of properties may be used, for example, in an object model application containing multiple objects where some of these objects are identical but are in different places within the parent object. The objects may be in different scopes within the parent object or be subject to different workflow constraints.

In an object model application with a design time (*e*.*g*., editing) and a demand time (e.g., execution), the application may comprise a shared object configured or instantiated with properties. The objects that are clones of this shared object preferably are not configured with properties during design time but instead point to the shared object. The clones of the shared objects may be shells of objects that are associated with the shared object. At demand time, the cloned objects are configured or instantiated using the properties of the shared object. Therefore, at demand time, the cloned objects are physically created and are capable of functioning on their own. When the demand event is completed, the cloned objects may be unconfigured or uninstantiated and may therefore revert back to design time mode such that they are shells of objects pointing to the shared object.

The invention may save time in developing and maintaining objects for an application because only one shared object must be configured with properties. The other objects that will be clones of the shared objects merely point to the shared object. This not only saves time and effort in application development but also in application maintenance. If the objects require alteration or editing, only the shared object requires attention, reducing not only time-consuming editing but also errors in the coding of an application. The cloned objects may not require editing because they may be configured at runtime only, and therefore will automatically be configured with properties of the shared object. Additionally, if the objects are large or complicated, configuring or instantiating only one of the objects during design time may facilitate saving memory.

### BRIEF DESCRIPTION OF THE DRAWINGS

The foregoing summary, as well as the following detailed description of illustrative embodiments, is better understood when read in conjunction with the appended drawings. For the purpose of illustrating the invention, there is shown in the drawings example constructions of the invention; however, the invention is not limited to the specific methods and instrumentalities disclosed. In the drawings:

FIG. 1 is a block diagram showing an example computing environment in which aspects of the invention may be implemented;

FIG. 2 is a block diagram showing an example embodiment of a system for object cloning shown during a design event;

FIG. 3 is a block diagram showing an example embodiment of a system for object cloning shown during a demand event;

FIG. 4 is a flow diagram of a method for performing a design event in a system for demand event cloning of objects; and

FIG. 5 is a flow diagram of a method for performing a demand event in a system for demand event cloning of objects.

### DETAILED DESCRIPTION OF ILLUSTRATIVE EMBODIMENTS

### Overview

One embodiment of the invention allows users to create one or more objects called cloned objects that share the same properties (*i*.*e*., attributes or settings) as another object called a shared object. At design time, only the shared object may be physically created. In this way, the shared object may be akin to a master copy from which other copies may be made. The cloned objects may be substantially empty shells that point to or are associated with the shared object. The cloned objects may be in different scopes and subject to different workflow constraints. When any of the cloned objects or the shared object is edited, this may have the same effect as physically updating the coding of the shared object. At demand time, this editing may be reflected by all of the cloned objects when the objects are used. At demand time the cloned objects physically may be created and executed appropriately. At the conclusion of a demand event, the cloned objects may become unconfigured and may return to their design time state as a shell with a pointer to a shared object. That is, the cloned object's properties may not be persisted; only the shared object's properties may be persisted.

### Example Computing Environment

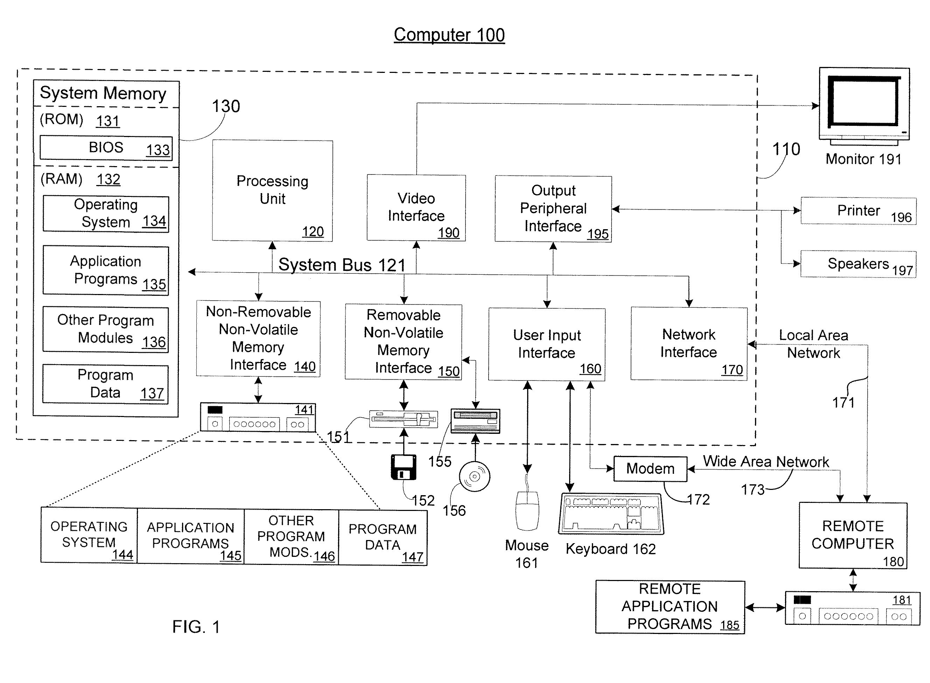

FIG. 1 and the following discussion are intended to provide a brief general description of a suitable computing environment in which an example embodiment of the invention may be implemented. It should be understood, however, that handheld, portable, and other computing devices of all kinds are contemplated for use in connection with the present invention. While a general purpose computer is described below, this is but one example. The present invention also may be operable on a thin client having network server interoperability and interaction. Thus, an example embodiment of the invention may be implemented in an environment of networked hosted services in which very little or minimal client resources are implicated, *e*.*g*., a networked environment in which the client device serves merely as a browser or interface to the World Wide Web.

Although not required, the invention can be implemented via an application programming interface (API), for use by a developer or tester, and/or included within the network browsing software which will be described in the general context of computer-executable instructions, such as program modules, being executed by one or more computers (e.g., client workstations, servers, or other devices). Generally, program modules include routines, programs, objects, components, data structures and the like that perform particular objects or implement particular abstract data types. Typically, the functionality of the program modules may be combined or distributed as desired in various embodiments. Moreover, those skilled in the art will appreciate that the invention may be practiced with other computer system configurations. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, minicomputers, mainframe computers, and the like. An embodiment of the invention may also be practiced in distributed computing environments where objects are performed by remote processing devices that are linked through a communications network or other data transmission medium. In a distributed computing environment, program modules may be located in both local and remote computer storage media including memory storage devices.

FIG. 1 thus illustrates an example of a suitable computing system environment 100 in which the invention may be implemented, although as made clear above, the computing system environment 100 is only one example of a suitable computing environment and is not intended to suggest any limitation as to the scope of use or functionality of the invention.
Neither should the computing environment 100 be interpreted as having any dependency or requirement relating to any one or combination of components illustrated in the exemplary operating environment 100.

With reference to FIG. 1, an example system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and nonvolatile, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, random access memory (RAM), read-only memory (ROM), Electrically-Erasable Programmable Read-Only Memory (EEPROM), flash memory or other memory technology, compact disc read-only memory (CDROM), digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency (RF), infrared, and other wireless media. Combinations of any of the above should also be included within the scope of computer readable media.

The system memory 130 includes computer storage media in the form of volatile and/or nonvolatile memory such as ROM 131 and RAM 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 124. By way of example, and not limitation, FIG. 1 illustrates operating system 134, application programs 135, other program modules 136, and program data 137. RAM 132 may contain other data and/or program modules.

The computer 110 may also include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CD ROM or other optical media. Other removable/non-removable, volatile/nonvolatile computer storage media that can be used in the example operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1 provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120a-f through a user input interface 160 that is coupled to the system bus 121, but may be connected by other interface and bus structures, such as a parallel port, game port or a universal serial bus (USB).

A monitor 191 or other type of display device is also connected to the system bus 121 via an interface, such as a video interface 190. In addition to monitor 191, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device.
By way of example, and not limitation, FIG. 1 illustrates remote application programs 185 as residing on memory device 181. It will be appreciated that the network connections shown are exemplary and other means of establishing a communications link between the computers may be used.

One of ordinary skill in the art can appreciate that a computer 110 or other client devices can be deployed as part of a computer network. In this regard, the present invention pertains to any computer system having any number of memory or storage units, and any number of applications and processes occurring across any number of storage units or volumes. An embodiment of the present invention may apply to an environment with server computers and client computers deployed in a network environment, having remote or local storage. The present invention may also apply to a standalone computing device, having programming language functionality, interpretation and execution capabilities.

### Object cloning for demand events

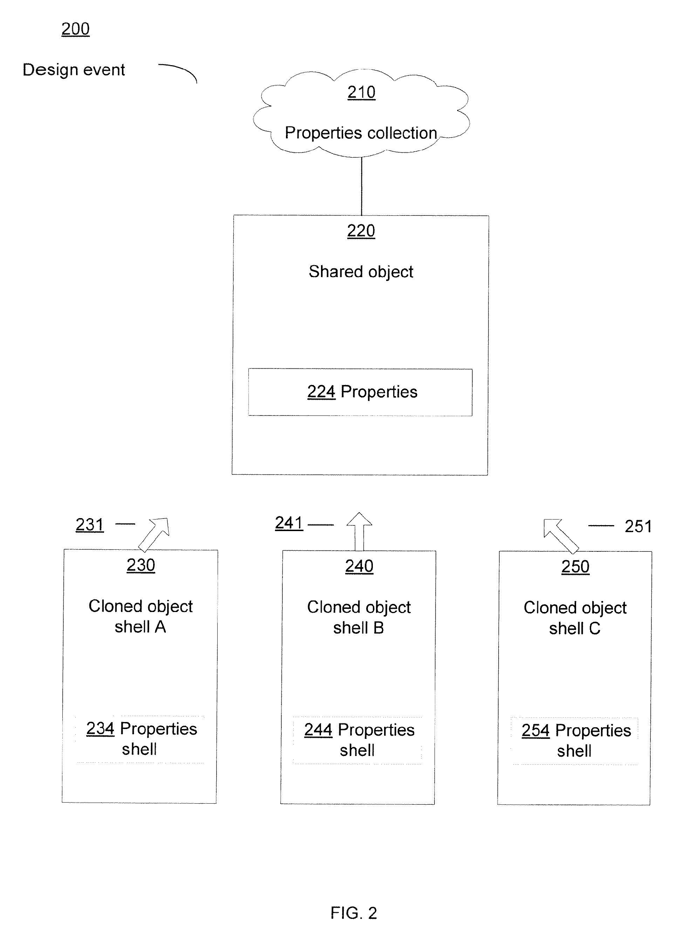

FIG. 2 depicts a block diagram of an example embodiment of a system 200 for object cloning for demand events, shown during a design time event. The system 200 may reside on one or more computers such as the computer 110 described with regard to FIG. 1. The system 200 may include a properties collection 210, a shared object 220 in communication with the properties collection 210, and cloned object shells 230, 240, 250, that point to (e.g., that know about and are associated with) the shared object 220.

The system 200 may be based on a workflow object model. An object model may be defined as a collection of objects and relationships. Each of the objects may be associated with one or more properties that govern the execution behavior of the object. The object model may generally comprise two states, a design time and a demand time.

The system 200 may be an application depicted during design time. The design time includes periods in which a design event is occurring. A design event is any event that is not a demand event. A design event includes editing the algorithms or coding of the system 200. A design event also includes persisting or loading the algorithms or code for the system 200. Demand time includes periods in which a demand event is occurring. A demand event is any event during which the object is used for the purpose for which it was developed. For example, a demand event includes an execution of an object of an application. A demand event also includes validating an application or an object in the application. Validating is similar to compiling and also may be defined as confirming ― without executing the application ― that the application or a part of the application as designed operates properly.

Objects may comprise other objects that perform functions or otherwise serve a purpose. Each object may define a work item to be performed within a larger object. The objects may perform the work of the application by, for example, copying files, downloading files, sending an electronic mail, cleaning data, performing queries, etc. The shared object 220 may be such an object. The shared object 220 is configured or instantiated with properties or attributes from the properties collection 210 at design time (and also, as described below, at demand time).

The properties collection 210 may reside, for example, on a server (not shown) of the system 200. The properties collection 210 may comprise any type of properties or attribute used for instantiating an object such as the shared object 220. For example, if the shared object 220 comprises steps for sending an electronic mail (e-mail) message, then the shared object 220, when configured or instantiated, may comprise properties such as an addressee name, a destination address, a subject, and message text. These properties may be configured or instantiated from the properties collection 210. Those skilled in the art will recognize that the shared object 220 may be configured or instantiated with properties from more than one properties collection.

The cloned object shells 230, 240, 250 may be "shells" of objects, meaning that they are not configured or instantiated objects during design time. Instead, the cloned object shells 230, 240, 250 point to the shared object 220. The arrows 231, 241, 251 depict this "pointing." The arrows indicate that the cloned object shells 230, 240, 250 may be configured or instantiated with the properties of the shared object 220 at demand time. That is, at demand time, the cloned object shells 230, 240, 250 may be physically created. At demand time, the cloned object shells 230, 240, 250 become independent executable objects capable of functioning independently.

The cloned object shells 230, 240, 250 each may comprise one or more properties shells 234, 244, 254. The property shells 234, 244, 254 depict that the properties of the cloned object shells 230, 240, 250 are not configured or instantiated during the design time. For example, cloned object shells 230, 240, 250 each may, when configured or instantiated, send an e-mail message. These e-mail cloned object shells, however, may not comprise any of the properties for sending the e-mail during design time. When each of one or more of the e-mail object shells 230, 240, 250 is executed, the properties of the cloned object shell may be populated with the properties of the shared object 220. The shared object 220 may provide all of the properties necessary for the execution of the cloned object shells 230, 240, 250, which (at execution) are no longer shells but executable objects.

During the design time, coding of the shared object 220 may be, for example, edited or persisted. A user may desire to alter the objects 220, 230, 240, 250 of the system 200. The user can alter or edit all of the objects 220, 230, 240, 250 by editing just the shared object 220. Any changes made to the shared object 220 can be manifested in the cloned object shells 230, 240, 250 during a demand event.

Additionally, a user may view the shared object 220 and the cloned object shells 230, 240, 250 from a user interface. A user may edit the shared object 220 or the properties collection 210 by selecting it from the user interface. It should be understood that the user may also edit the shared object 220 or the properties collection 210 by selecting any of the cloned object shells 230, 240, 250. In selecting one of the cloned object shells 230, 240, 250, the user actually opens the shared object 220 or the properties collection 210. The user then may edit the shared object 220 or the properties collection 210. The user may not even know that he or she is editing the shared object and may think the edits are being applied to the cloned object. By analogy, this may be considered akin to selecting a "shortcut" icon on a computer desktop that enables a program to be executed and a document to be presented to a user. The user may edit such a document and this editing is being performed on the document itself even though the document was accessed using such a shortcut.

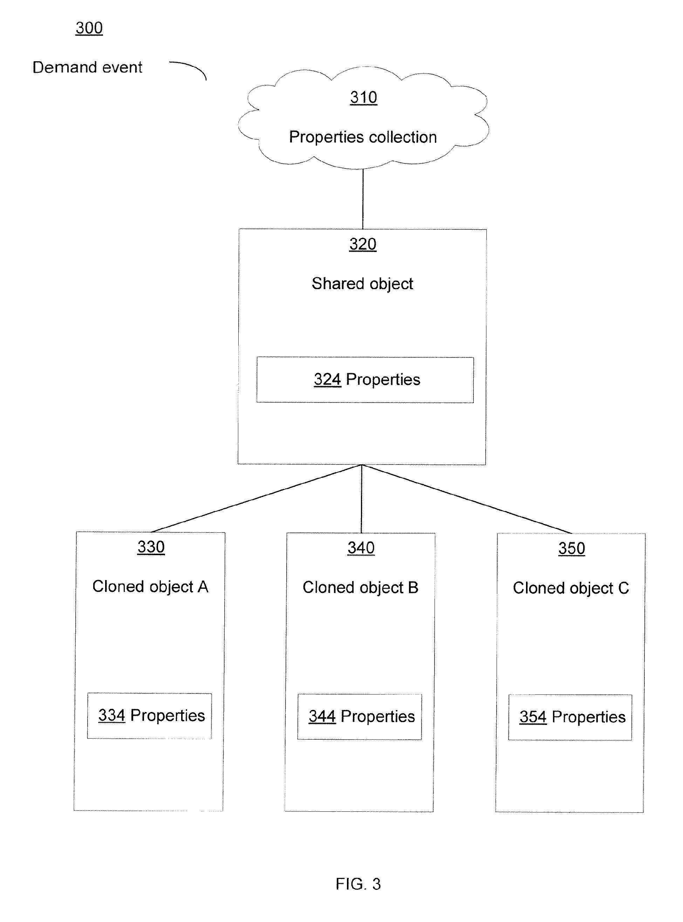

FIG. 3 depicts a block diagram of an example embodiment of a system 300 for demand time cloning of objects. The system 300 may be the same system as system 200 described with regard to FIG. 2 except that the system 300 is depicted at demand time vice design time. The system 300 may reside on one or more computers such as the computer 110 described with regard to FIG. 1. The system 300 may include a properties collection 310, a shared object 320 in communication with the properties collection 310, and cloned objects 330, 340, 350 in communication with the shared object 320.

The system 300 is an application depicted at demand time. The application may be based on an object model. As previously noted, the demand time may include periods in which the object is used for the purposes for which it was created. Such demand times include execution and validation of an object.

At demand time the shared object 320 may be configured or instantiated using the properties collection 310. The properties collection 310 may be substantially similar to the properties collection 210. The properties collection 310 may comprise any type of properties or attributes used for instantiating or configuring an object such as the shared object 320. For example, if the shared object 320 comprises steps for sending an e-mail message, then the shared object 320, when configured or instantiated, may comprise properties such as an addressee name, a destination address, a subject, and message text.

Also at demand time, one or more of the cloned object shells 230, 240, 250 may be configured or instantiated using the properties of the shared object 320 and become cloned objects 330, 340, 350. Alternatively, at demand time, one or more of the cloned object shells 230, 240, 250 may be configured or instantiated using the properties of the properties collection 310 and become the cloned objects 330, 340, 350. The cloned objects 330, 340, 350 may then comprise properties 334, 344, 354 of the shared object 320. Such configuration or instantiation may be invisible to the user. For example, the cloned objects 330, 340, 350 each may, like the shared object 320, send an e-mail message when a respective specified event occurs. The configured or instantiated cloned objects 330, 340, 350 may comprise properties such as an addressee name, a destination address, a subject, and message text. When one or more of the cloned objects 330, 340, 350 are executed, the user may not know whether the e-mail message was sent by one of the cloned objects 330, 340, 350 or the shared object 320.

In one embodiment of the invention, the shared object 320 and the configured or instantiated cloned objects 330, 340, 350 may be executed with identical properties and in an identical manner. Continuing the e-mail example, the shared object 320 and the configured or instantiated cloned objects 330, 340, 350 may all send an identical message with an identical subject from an identical addressee name to the same destination.

In an alternative embodiment of the invention, the instantiation of the cloned objects 330, 340, 350 may be bifurcated. The cloned object shells 230, 240, 250 from the design time may be configured or instantiated at demand time to become the cloned objects 330, 340, 350. It may be important for a user, however, to then have the cloned objects 330, 340, 350 differ in some respect from one another and from the shared object 320. That is, the user may not want identical messages with an identical subject sent with identical addressee names to the same destination. The user may want a header in the message to be different for one of the cloned objects, or may want one of the messages to go to person X, another to person Y, and still another to person Z. Such modifications of the cloned objects may be configured dynamically at demand time. This may be completed by altering a variable in a property expression. Such alterations may be completed by any object. Bifurcated instantiation may add flexibility by allowing alterations to be made to the cloned objects 330, 340, 350 while still allowing editing of the shared object 320 during design time to be applied to the cloned objects 330, 340, 350.

When the demand time is completed, the configured or instantiated cloned objects 330, 340, 350 may revert back to the design time state. That is, the cloned objects 330, 340, 350 may again become cloned object shells 230, 240, 250 described with regard to FIG. 2. The shared object 320, as before, may be configured or instantiated during design time. In this way, if a user edits the shared object 320, all of the cloned objects 330, 340, 350 that are configured or instantiated through the properties of the shared object 320 will, upon a demand event, reflect the changes made to the shared object 320.

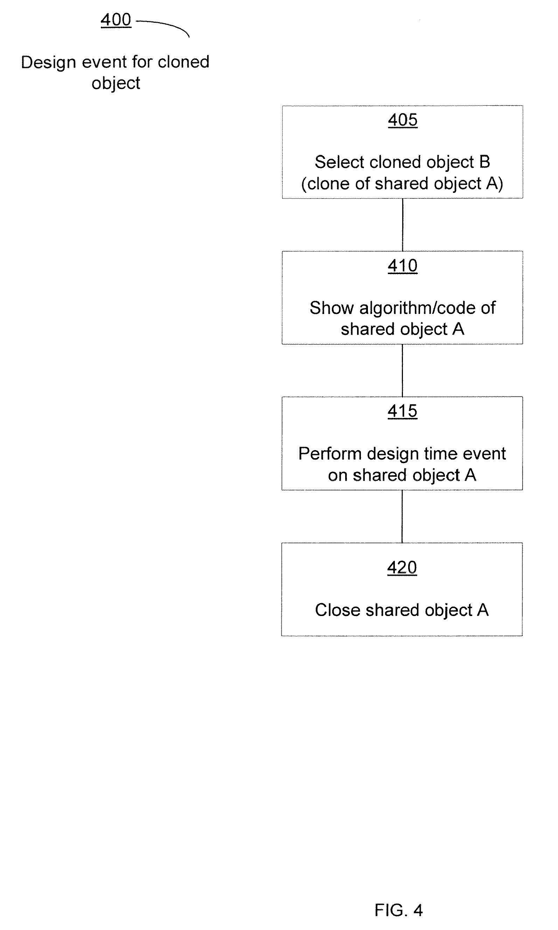

FIG. 4 depicts a flow diagram of a method 400 for performing a design time event on a cloned object. Such a design time event may be editing a cloned object. Another design time event may be persisting a cloned object. At step 405, a cloned object such as a cloned object B may be selected for a design time event. The cloned object B may be a clone of a shared object A. That is, the cloned object B may be "pointing" to or be associated with the shared object A but may not be configured or instantiated with the properties of the shared object A. The cloned object B may be selected by any suitable method, such as "clicking" on the cloned object B with a mouse in a user interface. Upon selection, the user automatically may be directed, at step 410, to the shared object A. This may occur without the user's knowledge. That is, the user clicks on the cloned object B, and coding or some other way of implementing an algorithm appears which the user may assume is the coding for the cloned object B. In actuality, the user may be viewing coding or some other way of implementing an algorithm for the shared object A. At step 415, a design time event may be performed on the shared object A. Again, the user may believe that the design time event is being performed on the cloned object B when in actuality, the event may be applied to the shared object A. Upon completion of the design time event, the shared object A may be closed at step 420. In sum, the user may not know that the design time event was applied to the shared object A and not to the cloned object B. When the cloned object B is in demand time, however, the cloned object B may operate in accordance with the design time event applied to the shared object A. In this way, the method may aid in reducing labor intensive maintenance on an application comprising numerous similar objects located in various locations. Editing the cloned object B, for example, may actually result in editing the shared object A. Editing the shared object A may result in editing numerous other objects located throughout an application that point to (and therefore are a clone of) the shared object A.

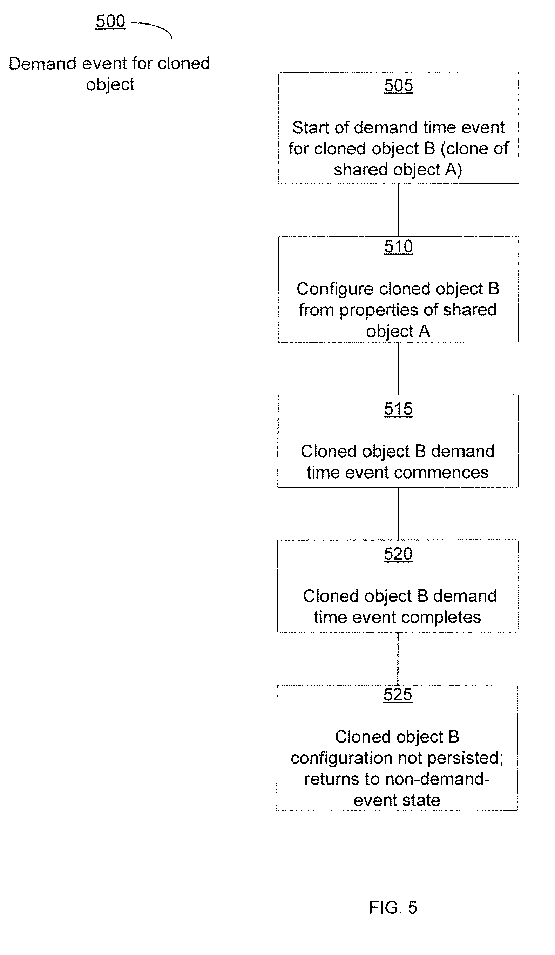

FIG. 5 depicts a method 500 for applying a demand time event to a cloned object. The cloned object may be a cloned object B, which may be a clone ― or share the properties ― of a shared object A. At step 505, the cloned object B demand time event may commence. The cloned object B may be configured or instantiated at step 510 with the properties of the shared object A. Alternatively, as described above, the cloned object B may be configured or instantiated with the properties of a properties collection, such as the properties collection 310 described with regard to FIG. 3. At step 515, the cloned object B may commence its demand time event. At step 520, the demand time event may be completed. Finally, at step 525, the cloned object B may return to its non-demand-time state. That is, the cloned object B may no longer be configured or instantiated but may return to its state of pointing to the shared object A. In this way, if the shared object A is edited, the cloned object B may automatically upon its next demand time event, reflect those edits.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the creation and/or implementation of domain-specific programming models aspects of the present invention, e.g., through the use of a data processing API or the like, are preferably implemented in a high level procedural or object oriented programming language to communicate with a computer system. However, the program(s) can be implemented in assembly or machine language, if desired. In any case, the language may be a compiled or interpreted language, and combined with hardware implementations.

While the present invention has been described in connection with the preferred embodiments of the various figures, it is to be understood that other embodiments may be used or modifications and additions may be made to the described embodiments for performing the same function of the present invention without deviating therefrom. For example, embodiments of the invention have been described with regard to certain design time events such as editing or persisting. Any design time events could equally form an example embodiment of the invention. Likewise, the demand time events have been described as executing and validating, though any other demand time event could fall under the scope of the invention. It should be recognized that other example embodiments of the invention may contain any number of cloned objects and shared objects. In no way is the present invention limited to the examples provided and described herein. Therefore, the present invention should not be limited to any single embodiment, but rather should be construed in breadth and scope in accordance with the appended claims.

## Claims

1. A method for demand event cloning of an object, comprising:
initiating a demand event on an object shell, wherein the object shell points to at least one of a shared object and a properties collection;
creating a cloned object by configuring the object shell with properties from the at least one of the shared object and the properties collection; and
applying a demand event to the cloned object.

2. The method of claim 1, further comprising returning the cloned object to a cloned object shell upon completion of the demand event.

3. The method of claim 1, further comprising altering a variable in a property expression of a property.

4. A method for performing a design event on a cloned object, comprising:
creating a cloned object shell pointing to at least one of a shared object and a properties collection;
receiving a selection of the cloned object shell;
showing at least one of the shared object and the properties collection;
receiving a design event; and
applying the design event to the at least one of the shared object and the properties collection.

5. A system for cloning objects in an object-oriented application, comprising:
a shared object having one or more properties associated therewith; and
a cloned object associated with the shared object, wherein the cloned object:
is configured with said properties upon initiation of a demand event on the cloned object, and
points to the properties during a design event initiated on the cloned object.

6. The system of claim 5, further comprising:
a properties collection comprising said properties, wherein upon the initiation of the demand event, the cloned object is configured with the properties of the properties collection.

7. The system of claim 6, wherein the design event initiated on the cloned object is applied to the properties collection.

8. The system of claim 6, wherein the shared object is configured with the properties of the properties collection upon initiation of at least one of a design event and a demand event on the shared object.

9. The system of claim 5, wherein the design event initiated on the cloned object is applied to the shared object.

10. The system of claim 5, wherein the design event comprises at least one of editing and persisting.

11. The system of claim 5, wherein the demand event comprises at least one of executing and validating.

12. The system of claim 5, wherein the cloned object is unconfigured upon completion of a demand event on the cloned object.

13. The system of claim 5, wherein upon the initiation of the demand event on the cloned object, a variable in a property expression is altered.

14. A computer-readable medium having computer-executable instructions for performing steps, comprising:
initiating a demand event on an object shell, wherein the object shell points to at least one of a shared object and a properties collection; and
creating a cloned object by configuring the object shell with properties from the at least one of the shared object and the properties collection.

15. The computer-readable medium of claim 14, having further computer-executable instructions for performing the step of:
applying a demand event to the cloned object.

16. The computer-readable medium of claim 15, having further computer-executable instructions for performing the step of:
returning the cloned object to a cloned object shell upon completion of the demand event.

17. The computer-readable medium of claim 14, having further computer-executable instructions for performing the step of:
altering a variable in a property expression of a property.

18. A computer-readable medium having computer-executable instructions for performing steps, comprising:
receiving a selection of the cloned object shell, wherein the cloned object shell points to at least one of a shared object and a properties collection;
showing at least one of the shared object and the properties collection;
receiving a design event; and
applying the design event to the at least one of the shared object and the properties collection.
